# EUROPÄISCHE PATENTANMELDUNG

(11) **EP 1 101 433 A1**
(43) Veröffentlichungstag der Anmeldung: **23.05.2001**
(21) Anmeldenummer: 00124706.3
(22) Anmeldetag: 11.11.2000
(51) Int. Cl.: A47J 39/00, A47J 37/04

(54) **Speisenerwärmungsvorrichtung**

(30) Priorität: 17.11.1999 DE 19955290
(71) Anmelder: Blanco GmbH & Co. KG, D-75038 Oberderdingen (DE)
(72) Erfinder: Lerrahn, Wilfried, 75056 Sulzfeld (DE)
(74) Vertreter: Hoeger, Stellrecht & Partner

(57) **Zusammenfassung**

Um eine Speisenerwärmungsvorrichtung (100), umfassend eine Mehrzahl von Aufnahmen für Speisenbehältereinheiten und mindestens eine Induktionsspule zum induktiven Beheizen der Speisenbehältereinheiten, zu schaffen, welche zuverlässiger arbeitet, wird vorgeschlagen, daß die Speisenerwärmungsvorrichtung eine Transporteinrichtung (164) umfaßt, mittels derer mindestens eine der Speisenbehältereinheiten relativ zu der Induktionsspule von einem Wartebereich der Speisenerwärmungsvorrichtung, in dem die Speisenbehältereinheit nicht beheizbar ist, in einen Erwärmungsbereich der Speisenerwärmungsvorrichtung, in welchem die Speisenbehältereinheit mittels der Induktionsspule induktiv beheizbar ist, und aus dem Erwärmungsbereich zurück in den Wartebereich bewegbar ist.

## Beschreibung

Die vorliegende Erfindung betrifft eine Speisenerwärmungsvorrichtung, die eine Mehrzahl von Aufnahmen für Speisenbehältereinheiten und mindestens eine Induktionsspule zum induktiven Beheizen der Speisenerwärmungsvorrichtung umfaßt.

Solche Speisenerwärmungsvorrichtungen sind aus dem Stand der Technik, beispielsweise aus dem deutschen Gebrauchsmuster 296 20 603, bekannt.

Das genannte Gebrauchsmuster offenbart einen Speisen-Transportwagen mit einem ungefähr quaderförmigen, einen Hohlraum umschließenden Wagenkorpus, in dessen Hohlraum übereinander in vertikalem Abstand voneinander angeordnete horizontale Fachböden untergebracht sind, die mit jeweils mindestens einer Induktionsspule zum induktiven Beheizen einer über oder unter der Induktionsspule angeordneten, auf einem der Fachböden abgestellten Speisenbehältereinheit versehen sind, wobei die Induktionsspulen durch ein elektrisches bzw. elektronisches Speisegerät, welches einen Hochfrequenzgenerator umfaßt, mit einem Hochfrequenzwechselstrom gespeist werden können.

Unter einer Speisenbehältereinheit ist dabei eine mindestens einen Speisenbehälter umfassende Einheit zu verstehen, die als Ganzes in die Speisenerwärmungsvorrichtung, also beispielsweise den Speisen-Transportwagen, eingebracht bzw. aus demselben entnommen wird.

In der Regel umfaßt eine solche Speisenbehältereinheit einen oder mehrere Speisenbehälter und ein Tablett, auf welchem diese Speisenbehälter angeordnet sind.

Speisen-Transportwagen der vorstehend erwähnten Art dienen dazu, die in den Speisenbehältern angeordneten Speisen, gegebenenfalls ganze Menüs, unter Umständen aber auch warm oder heiß zu konsumierende Getränke, zu erwärmen oder zu erhitzen oder warmzuhalten, solange der Transportwagen an ein elektrisches Versorgungsnetz angeschlossen ist, worauf die Speisen in dem Transportwagen zum Beispiel zu den einzelnen Patienten eines Krankenhauses gefahren werden.

Bei den Speisenbehältern handelt es sich meist um schalen- oder schüsselförmige Behältnisse, welche durch einen Deckel abgedeckt werden; die Schalen, Schüsseln oder Teller sind meist aus Porzellan, auf das Metallfolien aufgeklebt oder metallische Bereiche aufgespritzt sind, während es sich bei den Deckeln meist um Kunststoffteile handelt, in welche folienförmige Metallteile eingebettet sind. In diesen metallischen Bereichen werden dann durch über und/oder unter den Speisenbehältern befindliche Induktionsspulen Wirbelströme erzeugt, welche zu einer Erwärmung der Speisenbehälter und damit der Speisen bzw. Getränke führen.

Bei den bekannten Speisenerwärmungsvorrichtungen der eingangs genannten Art ist zum Erwärmen jeder Speisenbehältereinheit jeweils ein Fachboden mit einer daran angeordneten Induktionsspule und einem zugehörigen Spulenträgerrahmen vorgesehen. Die Vielzahl der erforderlichen Spulenträgerrahmen führt zu einem aufwendigen Aufbau und zu einer hohen Störanfälligkeit der bekannten Speisenerwärmungsvorrichtungen.

Der vorliegenden Erfindung liegt daher die Aufgabe zugrunde, eine Speisenerwärmungsvorrichtung der eingangs genannten Art zu schaffen, welche zuverlässiger arbeitet.

Diese Aufgabe wird bei einer Speisenerwärmungsvorrichtung mit den Merkmalen des Oberbegriffs von Anspruch 1 erfindungsgemäß dadurch gelöst, daß die Speisenerwärmungsvorrichtung eine Transporteinrichtung umfaßt, mittels derer mindestens eine der Speisenbehältereinheiten relativ zu der Induktionsspule von einem Wartebereich der Speisenerwärmungsvorrichtung, in dem die Speisenbehältereinheit nicht beheizbar ist, in einen Erwärmungsbereich, in welchem die Speisenbehältereinheit mittels der Induktionsspule induktiv beheizbar ist, und aus dem Erwärmungsbereich zurück in den Wartebereich bewegbar ist.

Durch die erfindungsgemäß vorgesehene Transporteinrichtung ist es möglich, die in der Speisenerwärmungsvorrichtung aufgenommenen Speisenbehältereinheiten seriell, d.h. nacheinander, mittels einer Anzahl von Induktionsspulen zu erwärmen, welche kleiner ist als die Anzahl der Speisenbehältereinheiten.

Insbesondere kann vorgesehen sein, daß nur ein oder zwei Speisenbehältereinheiten gleichzeitig in dem Erwärmungsbereich aufgewärmt werden, während die übrigen Speisenbehältereinheiten sich in dem Wartebereich befinden.

Werden von beispielsweise 16 Speisenbehältereinheiten zu jedem gegebenen Zeitpunkt nur zwei induktiv beheizt, so beträgt die Anzahl der hierfür erforderlichen Induktionsspulen und Spulenträgerrahmen nur ein Achtel der Anzahl, welche bei gleichzeitiger Erwärmung aller Speisenbehältereinheiten erforderlich wäre. Entsprechend geringer ist bei der erfindungsgemäßen Speisenerwärmungsvorrichtung der Material- und Montageaufwand für die Induktionsspulen und die durch Defekte an den Induktionsspulen verursachte Ausfallquote.

Ferner ist bei der erfindungsgemäßen Speisenerwärmungsvorrichtung die Anzahl der jeweils gleichzeitig im Erwärmungsbereich beheizten Speisenbehältereinheiten - unabhängig von der Gesamtanzahl der zu erwärmenden Speisenbehältereinheiten - konstant, so daß die Induktionsspulen der Induktionsheizeinrichtung und der diese Induktionsspulen speisende Hochfrequenzgenerator stets unter denselben Lastverhältnissen arbeiten, unabhängig davon, ob die Aufnahmen der Speisenerwärmungsvorrichtung für Speisenbehältereinheiten vollständig oder nur teilweise belegt sind.

Außerdem kann der Hochfrequenzgenerator in unmittelbarer Nachbarschaft zu den den Erwärmungsbereich beheizenden Induktionsspulen angeordnet werden, so daß die gesamte Induktionsheizeinrichtung der Speisenerwärmungsvorrichtung als kompaktes Induktionsheizungsmodul ausgebildet und in einem einzigen Montageschritt in die Speisenerwärmungsvorrichtung eingebracht werden kann.

Vorzugsweise ist vorgesehen, daß mittels der Transporteinrichtung mehrere Speisenbehältereinheiten nacheinander in dieselbe Erwärmungsposition des Erwärmungsbereichs bewegbar sind. Hierdurch kann die Anzahl der Erwärmungspositionen gegenüber der Anzahl der zu erwärmenden Speisenbehältereinheiten reduziert werden.

Um sukzessive die Speisenbehälter jeder in der Speisenerwärmungsvorrichtung aufgenommenen Speisenbehältereinheit beheizen zu können, ist vorteilhafterweise vorgesehen, daß jede der Speisenbehältereinheiten mittels der Transporteinheit von dem Wartebereich in den Erwärmungsbereich und aus dem Erwärmungsbereich zurück in den Wartebereich bewegbar ist.

Insbesondere kann vorgesehen sein, daß die Speisenbehältereinheiten zyklisch von dem Wartebereich in den Erwärmungsbereich und von dem Erwärmungsbereich zurück in den Wartebereich bewegbar sind. Dadurch kann in einfacher Weise jede Speisenbehältereinheit mehrfach beheizt werden, falls dies aufgrund einer langen Wartezeit erforderlich ist.

Um eine möglichst große Anzahl von Speisenbehältereinheiten in der Speisenerwärmungsvorrichtung unterbringen und seriell induktiv erwärmen zu können, ist bei einer bevorzugten Ausgestaltung der erfindungsgemäßen Speisenerwärmungsvorrichtung vorgesehen, daß der Wartebereich eine Mehrzahl von Wartepositionen für die Speisenbehältereinheiten umfaßt.

Insbesondere kann vorgesehen sein, daß die Speisenbehältereinheiten mehrere Wartepositionen in dem Wartebereich durchlaufen, bevor sie in den Erwärmungsbereich gelangen.

Grundsätzlich würde es genügen, wenn in dem Erwärmungsbereich der Speisenerwärmungsvorrichtung eine einzige Erwärmungsposition vorgesehen ist, in welcher eine Speisenbehältereinheit induktiv beheizbar ist.

Ist die Anzahl der zu beheizenden Speisenbehältereinheiten groß, so ist es jedoch von Vorteil, wenn der Erwärmungsbereich mehrere, vorzugsweise zwei, Erwärmungspositionen für die Speisenbehältereinheiten umfaßt, um den Erwärmungsvorgang zu beschleunigen.

Um die Induktionsheizeinrichtung, mittels welcher Speisenbehältereinheiten in mehreren Erwärmungspositionen beheizbar sind, kompakt zu halten, ist vorzugsweise vorgesehen, daß die mehreren Erwärmungspositionen in derselben horizontalen Ebene nebeneinander angeordnet sind.

Grundsätzlich kann vorgesehen sein, daß die Speisenbehältereinheiten durch die Transporteinrichtung kontinuierlich aus dem Wartebereich in den Erwärmungsbereich und aus dem Erwärmungsbereich zurück in den Wartebereich bewegbar sind.

Für die induktive Heizung ist es jedoch von Vorteil, wenn sich die zu beheizenden Speisenbehältereinheiten während des Heizvorgangs relativ zu der jeweiligen Induktionsspule in Ruhe befinden.

Bei einer bevorzugten Ausgestaltung der erfindungsgemäßen Speisenerwärmungsvorrichtung ist daher vorgesehen, daß die Speisenbehältereinheiten durch die Transporteinrichtung taktweise von einer Warte- oder Erwärmungsposition zu einer längs einer Förderrichtung der Transporteinrichtung darauf folgenden Warte- oder Erwärmungsposition bewegbar sind. In diesem Fall befinden sich die Speisenbehältereinheiten zwischen zwei aufeinanderfolgenden Arbeitstakten der Transporteinrichtung in Ruhe; die in einer Erwärmungsposition befindlichen Speisenbehältereinheiten, die mittels der Induktionsspule oder den Induktionsspulen induktiv beheizt werden, bewegen sich somit zwischen den Arbeitstakten der Transporteinrichtung nicht relativ zu der Induktionsspule bzw. den Induktionsspulen der Induktionsheizeinrichtung.

Günstig ist es, wenn die Transporteinrichtung in einem Automatikmodus betreibbar ist, in welchem die Transporteinrichtung selbsttätig mehrere Arbeitstakte hintereinander ausführt. In diesem Fall werden die in der Speisenerwärmungsvorrichtung angeordneten Speisenbehältereinheiten seriell induktiv beheizt, ohne daß die hierzu erforderlichen Arbeitstakte der Transporteinrichtung von einer Bedienungsperson ausgelöst werden müßten.

Um die Speisenerwärmungsvorrichtung sukzessive mit den zu beheizenden Speisenbehältereinheiten beladen zu können, ist es ergänzend oder alternativ hierzu von Vorteil, wenn die Transporteinrichtung in einem Einzelschrittmodus betreibbar ist, in welchem die Transporteinrichtung bei Betätigung eines Betätigungselements einen einzelnen Arbeitstakt ausführt.

Bislang wurden noch keine näheren Angaben zum Aufbau der Transporteinrichtung gemacht.

Sind in der Speisenerwärmungsvorrichtung mehrere übereinander angeordnete Warte- und/oder Erwärmungspositionen für die Speisenbehältereinheiten vorgesehen, so umfaßt die Transporteinrichtung vorteilhafterweise mindestens einen Vertikalförderer, durch welchen die Speisenbehältereinheiten in vertikaler Richtung bewegbar sind.

Ein besonders einfacher Aufbau eines solchen Vertikalförderers wird erzielt, wenn der Vertikalförderer mindestens ein umlaufendes Endlosförderelement umfaßt.

Insbesondere kann vorgesehen sein, daß die Speisenerwärmungsvorrichtung zwei Vertikalförderer umfaßt, wobei die Speisenbehältereinheiten mittels eines ersten Vertikalförderers in vertikaler Richtung nach oben und mittels des zweiten Vertikalförderers in vertikaler Richtung nach unten bewegbar sind.

Sind in der Speisenerwärmungsvorrichtung mehrere Warte- und/ oder Erwärmungspositionen für die Speisenbehältereinheiten nebeneinander vorgesehen, so umfaßt die Transporteinrichtung vorteilhafterweise mindestens einen Horizontalförderer, durch welchen die Speisenbehältereinheiten in horizontaler Richtung bewegbar sind.

Ein solcher Horizontalförderer kann beispielsweise mindestens einen in horizontaler Richtung linear bewegbaren Schieber umfassen.

Bei einer bevorzugten Ausgestaltung der erfindungsgemäßen Speisenerwärmungsvorrichtung ist vorgesehen, daß die Induktionsspule in eine Bodenplatte der Speisenerwärmungsvorrichtung integriert ist. Eine solche Bodenplatte kann besonders leicht gereinigt werden. Außerdem kann der Hochfrequenzgenerator für die Speisung der Induktionsspule unterhalb der Bodenplatte in unmittelbarer Nachbarschaft zu der Induktionsspule angeordnet werden.

Um in der Speisenerwärmungsvorrichtung solche Speisenbehältereinheiten aufnehmen zu können, welche ein Speisenbehälter-Tablett umfassen, ist vorteilhafterweise vorgesehen, daß die Transporteinrichtung Tabletthalter zur Aufnahme von Speisenbehälter-Tabletts umfaßt.

Um solche Speisenbehälter-Tabletts von einer Warte- oder Erwärmungsposition in eine auf selber Höhe neben derselben angeordnete Warte- und/oder Erwärmungsposition bewegen zu können, ist es günstig, wenn die in den Tabletthaltern aufgenommenen Speisenbehälter-Tabletts in horizontaler Richtung verschiebbar sind.

Bei einer bevorzugten Ausgestaltung der erfindungsgemäßen Speisenerwärmungsvorrichtung ist vorgesehen, daß die Speisenerwärmungsvorrichtung einen geschlossenen Korpus mit einer verschließbaren Beschickungs- und Entnahmeöffnung umfaßt. Ein solcher Korpus kann mit einer geeigneten Wärmeisolierung versehen sein, um die darin aufgenommenen Speisenbehälter nach deren Erwärmung warmzuhalten.

Eine einfache Reinigung des Korpus ist gewährleistet, wenn der Innenraum des Korpus im wesentlichen quaderförmig ist und außer der Transporteinrichtung keine weiteren in den Innenraum hineinragenden Einbauten aufweist. Ein solcher Aufbau des Korpus wird dadurch ermöglicht, daß bei der erfindungsgemäßen Speisenerwärmungsvorrichtung keine Spulenträgerrahmen im Innenraum des Korpus angeordnet sein müssen.

Die erfindungsgemäße Speisenerwärmungsvorrichtung kann als ortsfeste Vorrichtung, beispielsweise als Vorratsmagazin zum Speichern der Speisenbehältereinheiten, ausgebildet sein.

Alternativ hierzu ist es jedoch auch möglich, vorzusehen, daß die Speisenerwärmungsvorrichtung mittels Rollen verfahrbar ist. Eine solche verfahrbare Speisenerwärmungsvorrichtung kann als Speisen-Transportwagen verwendet und zwischen dem Beladen mit den Speisebehältereinheiten und deren Erwärmung, zwischen der Erwärmung und der Entnahme der Speisenbehältereinheiten oder zwischen der Entnahme einzelner Speisenbehältereinheiten nach dem Erwärmungsvorgang jeweils an einen anderen Ort gebracht werden, um die darin enthaltenen und erwärmten Speisenbehältereinheiten an einer Mehrzahl von Ausgabestellen, beispielsweise in verschiedenen Patientenzimmern eines Krankenhauses, ausgeben zu können.

Weitere Merkmale und Vorteile der Erfindung sind Gegenstand der nachfolgenden Beschreibung und zeichnerischen Darstellung eines Ausführungsbeispiels.

In den Zeichnungen zeigen:
- Fig. 1: eine Seitenansicht einer Speisenerwärmungsvorrichtung;
- Fig. 2: einen Querschnitt durch die Speisenerwärmungsvorrichtung aus Fig. 1 mit derselben Blickrichtung wie in Fig. 1;
- Fig. 3: einen schematischen Längsschnitt durch die Speisenerwärmungsvorrichtung längs der Linie 3-3 in Fig. 1, in einer ersten Phase eines Transportzyklus;
- Fig. 4: einen der Fig. 3 entsprechenden Längsschnitt durch die Speisenerwärmungsvorrichtung, in einer zweiten Phase eines Transportzyklus;
- Fig. 5: einen der Fig. 3 entsprechenden Längsschnitt durch die Speisenerwärmungsvorrichtung, in einer dritten Phase eines Transportzyklus;
- Fig. 6: einen der Fig. 3 entsprechenden Längsschnitt durch die Speisenerwärmungsvorrichtung, in einer vierten Phase eines Transportzyklus; und
- Fig. 7: eine schematische perspektivische Darstellung einer Induktionsspulenanordnung der Speisenerwärmungsvorrichtung aus den Fig. 1 bis 6.

Gleiche oder funktional äquivalente Elemente sind in allen Figuren mit denselben Bezugszeichen bezeichnet.

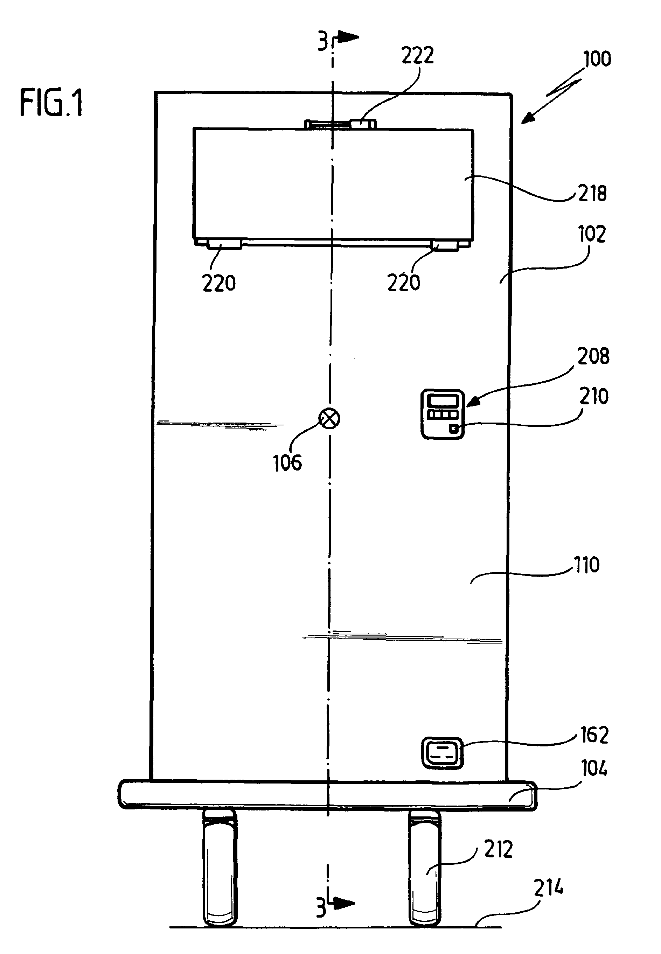

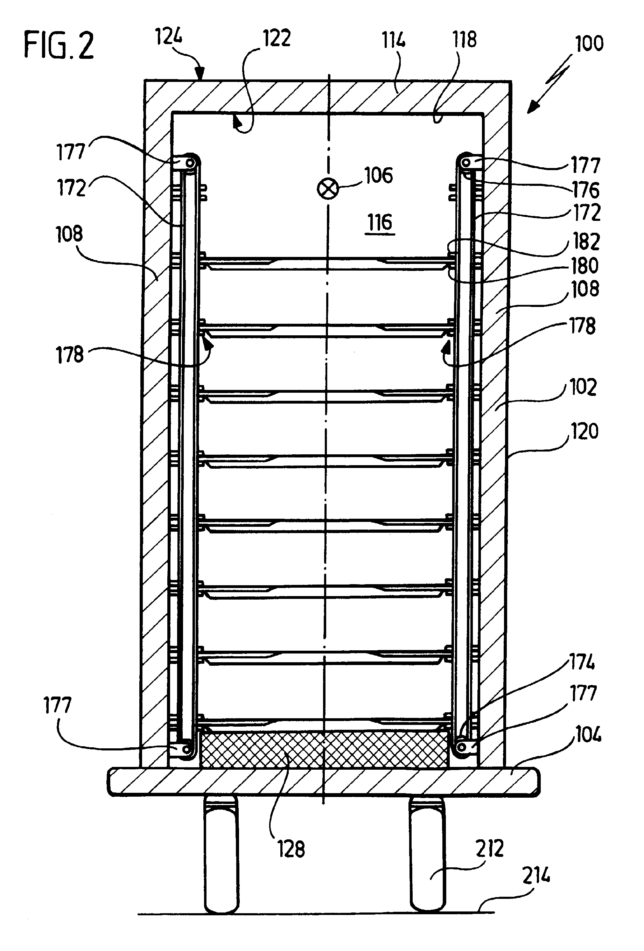

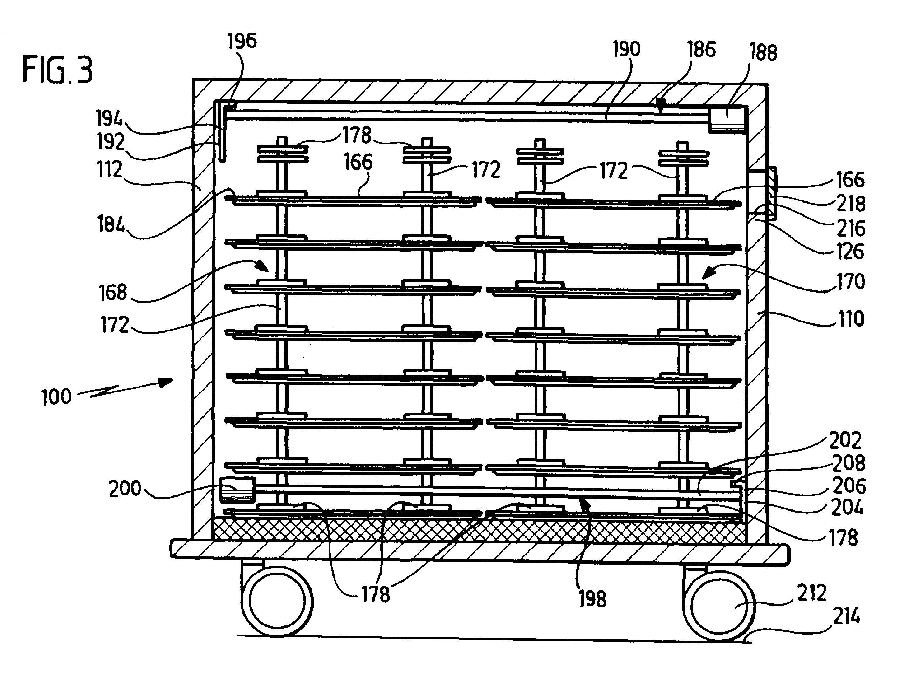

Eine in den Fig. 1 bis 7 dargestellte, als ganzes mit 100 bezeichnete Ausführungsform einer Speisenerwärmungsvorrichtung umfaßt einen im wesentlichen quaderförmigen Korpus 102, welcher sich (siehe Fig. 2 und 3) aus einer horizontalen Grundplatte 104, einem Paar sich parallel zu einer Längsrichtung 106 der Speisenerwärmungsvorrichtung erstreckender, senkrecht zur Längsrichtung 106 voneinander beabstandeter Seitenwände 108, einer Vorderwand 110 und einer Rückwand 112, welche sich senkrecht zur Längsrichtung 106 erstrecken und längs der Längsrichtung 106 voneinander beabstandet sind, und einer horizontalen Deckenwand 114 zusammensetzt.

Jede der den Korpus 102 bildenden Wände 104, 108, 110 und 112 weist eine dem Innenraum 116 des Korpus 102 zugewandte metallische Innenverkleidung 118 und eine dem Außenraum des Korpus 102 zugewandte metallische Außenverkleidung 120 auf, wobei die Innenverkleidungen 118 zusammen eine geschlossene Innenschale 122 und die Außenverkleidungen 120 zusammen eine geschlossene Außenschale 124 des Korpus 102 bilden.

Der zwischen der Innenschale 122 und der Außenschale 124 verbleibende Hohlraum ist mit einer Wärmeisolierung 126 aus einem Material mit geringer Wärmeleitfähigkeit, beispielsweise aus einem Schaumkunststoff, ausgefüllt.

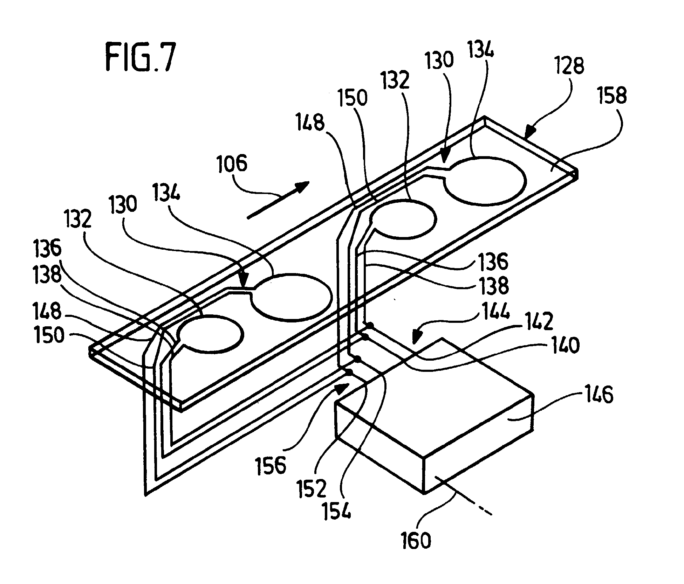

Wie am besten aus den Fig. 2 bis 6 zu ersehen ist, ist am Boden des Innenraums 116 der Speisenerwärmungsvorrichtung 100 eine als Ganzes mit 128 bezeichnete Induktionsheizung angeordnet, welche im folgenden unter Bezugnahme auf Fig. 7 näher erläutert werden wird.

Die Induktionsheizung 128 umfaßt zwei in der Längsrichtung 106 der Speisenerwärmungsvorrichtung 100 aufeinanderfolgende Induktionsspulenpaare 130.

Jedes der Induktionsspulenpaare 130 umfaßt eine kleinere erste Induktionsspule 132 und eine größere zweite Induktionsspule 134, deren Spulenquerschnitte horizontal ausgerichtet sind.

Jede der kleineren Induktionsspulen 132 ist über Anschlußleitungen 136 und 138 mit einem ersten Anschluß 140 bzw. einem zweiten Anschluß 142 eines ersten Hochfrequenzausgangs 144 eines Hochfrequenzgenerators 146 verbunden.

In entsprechender Weise ist jede der größeren Induktionsspulen 134 über Anschlußleitungen 148 und 150 mit einem ersten Anschluß 152 bzw. einem zweiten Anschluß 154 eines zweiten Ausgangs 156 des Hochfrequenzgenerators 146 verbunden.

Die Induktionsspulen 132 und 134 und die an diese Spulen angrenzenden Bereiche der Anschlußleitungen 136, 138, 148 und 150 sind in eine im wesentlichen quaderförmige Bodenplatte 158 aus einem elektrisch isolierenden, hitzebeständigen Material, beispielsweise aus einem hochtemperaturbeständigen Glas oder Kunststoff, eingebettet.

Der Hochfrequenzgenerator 146 ist unterhalb der Bodenplatte 158 angeordnet.

Über eine Netzspannungsversorgungsleitung 160 ist der Hochfrequenzgenerator 146 an eine in der Vorderwand 110 des Korpus 102 angeordnete Netzsteckerbuchse 162 (siehe Fig. 1) angeschlossen, in welche ein (nicht dargestellter) Stecker eines Netzkabels zum Anschließen an eine externe Spannungsversorgung einsteckbar ist.

Wie aus den Fig. 2 bis 6 zu ersehen ist, ist im Innenraum 116 des Korpus 102 ferner eine als Ganzes mit 164 bezeichnete Transporteinrichtung angeordnet, welche dem Transport von Tabletts 166 durch den Innenraum 116 dient.

Die Tabletts 166 bilden zusammen mit darauf angeordneten (nicht dargestellten) Speisenbehältern Speisenbehältereinheiten, die in der Speisenerwärmungsvorrichtung 100 speicher- und erwärmbar sind.

Die Transporteinrichtung 164 umfaßt einen (in den Fig. 3 bis 6 links dargestellten) ersten Vertikalförderer 168, welcher an demselben angeordnete Tabletts von unten nach oben fördert, und einen (in den Fig. 3 bis 6 rechts dargestellten) zweiten Vertikalförderer 170, welcher an demselben angeordnete Tabletts von oben nach unten fördert.

Die Vertikalförderer 168 und 170 arbeiten taktweise und befördern bei jedem Arbeitstakt die daran angeordneten Tabletts 166 um eine Position nach oben bzw. nach unten.

Wie aus den Fig. 3 bis 6 zu ersehen ist, weist jeder der Vertikalförderer 168, 170 jeweils neun mögliche Positionen für Tabletts 166 auf, welche in vertikaler Richtung um beispielsweise 95 mm voneinander beabstandet sind.

Jeder der Vertikalförderer 168, 170 umfaßt als Förderelemente jeweils vier Zahnriemen 172, welche jeweils über ein unteres Antriebsritzel 174 und ein oberes Umlenkritzel 176 gespannt sind (siehe Fig. 2).

Die Antriebsritzel 174 und die Umlenkritzel 176 sind an Lagerböcken 177 drehbar gelagert, welche ihrerseits an der Innenseite der Seitenwände 108 festgelegt sind.

Die Antriebsritzel 174 sind mittels (nicht dargestellter) Antriebsmotoren antreibbar, um den jeweiligen Zahnriemen 172 in eine Umlaufbewegung zu versetzen.

In Längsrichtung der Zahnriemen 172 sind an deren Außenseiten Tabletthalter 178 angeordnet, welche der Aufnahme eines Randes jeweils eines der Tabletts 166 dienen. Jeder der Tabletthalter 178 umfaßt ein unteres Führungselement 180 und ein oberes Führungselement 182, deren Abstand längs der Längsrichtung des jeweiligen Zahnriemens 172 der Dicke eines umlaufenden Randes 184 der Tabletts 166 entspricht, so daß ein Tablett 166 in horizontaler Richtung zwischen das untere Führungselement 180 und das obere Führungselement 182 eingeschoben werden kann und im eingeschobenen Zustand gegen ein Anheben oder Verkippen gesichert ist.

Um ein Tablett 166 von der obersten Position des ersten Vertikalförderers 168 in die oberste Position des zweiten Vertikalförderers 170 fördern zu können, umfaßt die Transporteinrichtung 164 ferner einen oberen Horizontalförderer 186 (siehe Fig. 3 bis 6).

Der obere Horizontalförderer 186 umfaßt einen Drehantriebsmotor 188 und eine sich parallel zur Längsrichtung 106 der Speisenerwärmungsvorrichtung 100 erstreckende, durch den Drehantriebsmotor 188 in Drehung versetzbare Gewindespindel 190. Die Gewindespindel 190 trägt einen Tablettschieber 192 in Form eines Winkelelements mit einem vertikalen langen Schenkel 194 und einem horizontalen kurzen Schenkel 196. Im langen Schenkel 194 des Tablettschiebers 192 ist ein Gewinde-Durchgangsloch angeordnet, dessen Innengewinde mit dem Außengewinde der Gewindespindel 190 in Eingriff steht. Der kurze Schenkel 196 des Tablettschiebers 192 ist an einer (nicht dargestellten) Führungsschiene so geführt, daß sich der Tablettschieber 192 bei einer Drehung der Gewindespindel 190 nicht mit derselben mitdreht, sondern in axialer Richtung der Gewindespindel 190 verschoben wird.

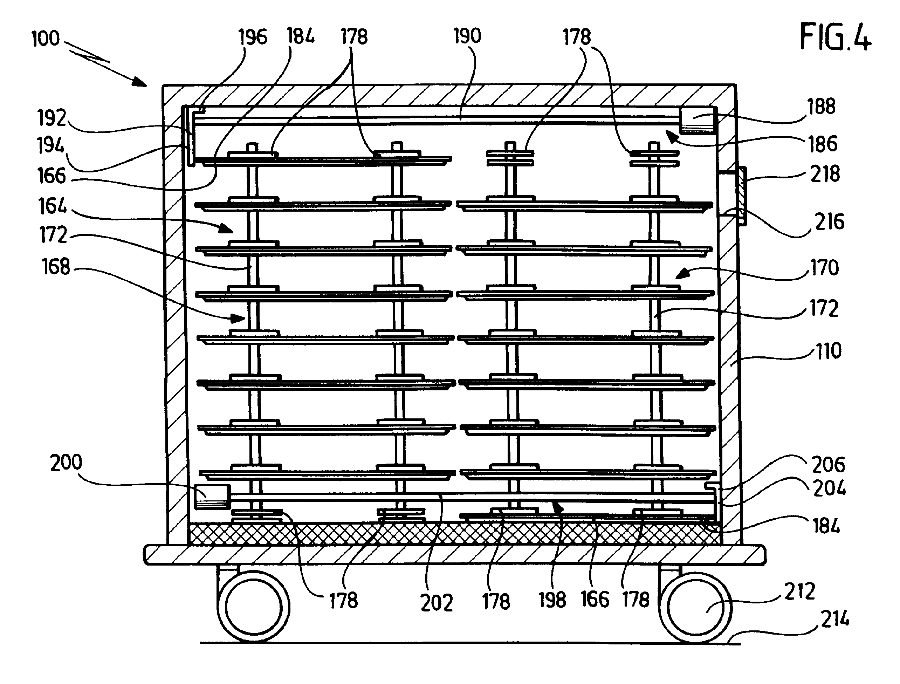

Befindet sich ein Tablett 166 in der obersten Position des ersten Vertikalförderers 168 (siehe Fig. 4) und wird der Tablettschieber 192 des oberen Horizontalförderers 186 aus seiner in Fig. 4 dargestellten Endstellung durch Drehung der Gewindespindel 190 auf den Drehantriebsmotor 188 zu (also in der Darstellung der Fig. 4 nach rechts) bewegt, so kommt der umlaufende Rand 184 des Tabletts 166 in Kontakt mit dem langen Schenkel 194 des Tablettschiebers 192, und das Tablett 166 wird in horizontaler Richtung aus den Tabletthaltern 178 des ersten Vertikalförderers 168 heraus und in die Tabletthalter 178 des zweiten Vertikalförderers 170 hinein verschoben. Ist die Verschiebebewegung des Tabletts 166 von der obersten Position des ersten Vertikalförderers 168 in die oberste Position des zweiten Vertikalförderers 170 abgeschlossen, so wird der Tablettschieber 192 des oberen Horizontalförderers 186 durch gegensinnige Drehung der Gewindespindel 190 wieder in seine in Fig. 4 dargestellte Endstellung zurückbewegt.

Ferner umfaßt die Transporteinrichtung 164 der Speisenerwärmungsvorrichtung 100 einen unteren Horizontalförderer 198, welcher dazu dient, ein Tablett 166 von der untersten Position des zweiten Vertikalförderers 170 in die unterste Position des ersten Vertikalförderers 168 zu fördern.

Der untere Horizontalförderer 198 umfaßt einen Drehantriebsmotor 200 und eine von diesem zu einer Drehbewegung antreibbare Gewindespindel 202.

Die Gewindespindel 202 steht in Eingriff mit dem Innengewinde eines Gewindelochs in einem langen Schenkel 204 eines winkel förmigen unteren Tablettschiebers 206, welcher von der Gewindespindel 202 getragen ist.

Ein horizontaler kurzer Schenkel 208 des unteren Tablett schiebers 206 ist an einer (nicht dargestellten) Führungsschiene so geführt, daß der untere Tablettschieber 206 bei einer Drehbewegung der Gewindespindel 202 nicht mitgedreht, sondern in axialer Richtung der Gewindespindel 202 verschoben wird.

Um ein Tablett 166 aus der untersten Position des zweiten Vertikalförderers 170 in die unterste Position des ersten Vertikalförderers 168 zu fördern, wird die Gewindespindel 202 mittels des Drehantriebsmotors 200 so gedreht, daß der untere Tablettschieber 206 aus seiner in Fig. 4 dargestellten Endstellung in Richtung auf den Drehantriebsmotor 200 zu verschoben wird. Dabei kommt der vertikale lange Schenkel 204 des unteren Tablettschiebers 206 in Kontakt mit dem umlaufenden Rand 184 des in der untersten Position des zweiten Vertikalförderers 170 befindlichen Tabletts 166 und verschiebt dieses aus den Tabletthaltern 178 des zweiten Vertikalförderers 170 heraus in die Tabletthalter 178 des ersten Vertikalförderers 168 hinein.

Wenn das zu verschiebende Tablett 166 die unterste Position des ersten Vertikalförderers 168 erreicht hat, wird der untere Tablettschieber 206 durch gegensinniges Drehen der Gewindespindel 202 in die in Fig. 4 dargestellte Endstellung zurückbewegt.

Die Transporteinrichtung 164 und die Induktionsheizung 128 werden mittels eines (nicht dargestellten) Steuergeräts gesteuert, welchem über ein an der Außenseite der Vorderwand 110 des Korpus 102 vorgesehenes Bedienfeld 208 (siehe Fig. 1) eine gewünschte Erwärmungszeit und Erwärmungsleistung vorgegeben werden kann.

Außerdem umfaßt das Bedienfeld 208 eine Drucktaste 210, deren Betätigung durch eine Bedienungsperson jeweils einen Arbeitstakt der Transporteinrichtung 164 auslöst.

An der Unterseite der Grundplatte 104 der Speisenerwärmungsvorrichtung 100 sind mehrere, beispielsweise vier, Laufrollen 212 um vertikale Achsen schwenkbar angeordnet, mittels derer die Speisenerwärmungsvorrichtung über einen Untergrund 214 verfahrbar und somit als Speisen-Transportwagen einsetzbar ist.

Ferner ist im oberen Bereich der Vorderwand 110 der Speisenerwärmungsvorrichtung 100 eine Beschickungs- und Entnahmeöffnung 216 vorgesehen, welche mittels einer Klappe 218, welche durch zwei Scharniere 220 um eine horizontale Achse schwenkbar an der Vorderwand 110 gehalten ist, verschließbar ist. Zur Betätigung der Klappe 218 ist an deren Oberseite ein Griff 222 vorgesehen.

Die Beschickungs- und Entnahmeöffnung 216 ist in der Vorderwand 110 so angeordnet und nach Höhe und Breite so bemessen, daß ein Tablett 166 mit darauf angeordneten Speisenbehältern durch die Beschickungs- und Entnahmeöffnung 216 hindurch in die zweitoberste Position des zweiten Vertikalförderers 170 eingeschoben oder aus der zweitobersten Position des zweiten Vertikalförderers 170 entnommen werden kann.

Die vorstehend beschriebene Speisenerwärmungsvorrichtung 100 funktioniert wie folgt:

Vor der Inbetriebnahme der Speisenerwärmungsvorrichtung 100 wird dieselbe an einem gewünschten Ort aufgestellt und mittels eines in die Netzsteckerbuchse 162 eingesteckten Netzkabels mit einer Spannungsquelle verbunden.

Dann wird zum Befüllen der Speisenerwärmungsvorrichtung 100, deren Tablettaufnahmen zunächst alle leer sind, die Klappe 218 geöffnet und ein mit den zu erwärmenden Speisenbehältern beladenes Tablett 166 durch die Beschickungs- und Entnahmeöffnung 216 in horizontaler Richtung in die Tabletthalter 178 der zweitobersten Position des zweiten Vertikalförderers 170 eingeschoben.

Anschließend wird die Drucktaste 210 betätigt, worauf der erste Vertikalförderer 168 die an ihm angeordneten Tabletthalter 178 um eine Position nach oben fördert, der untere Tablettschieber 206 aus seiner Endstellung nach links und wieder zurück bewegt wird, der zweite Vertikalförderer 170 die an ihm angeordneten Tabletthalter 178 und das in die zweitoberste Position dieses Vertikalförderers eingeschobene Tablett um eine Position nach unten fördert und der obere Tablettschieber 192 aus seiner Endstellung nach rechts und wieder zurückbewegt wird, wobei allerdings kein Tablett 166 verschoben wird, da die oberste Position des ersten Vertikalförderers 168 leer ist.

Nach diesem Arbeitstakt der Transporteinrichtung 164 ist die zweitoberste Position des zweiten Vertikalförderers 170 wieder leer, so daß ein zweites, mit Speisenbehältern beladenes Tablett 166 durch die Beschickungs- und Entnahmeöffnung 216 in diese Position eingeschoben werden kann.

So wird der Innenraum 116 der Speisenerwärmungsvorrichtung 100 durch abwechselndes Einschieben eines Tabletts 166 und Betätigen der Drucktaste 210 mit insgesamt 16 Tabletts 166 beladen, bis der in Fig. 3 dargestellte Zustand erreicht ist (in den Fig. 2 bis 6 sind aus Gründen der Übersichtlichkeit die auf den Tabletts 166 angeordneten Speisenbehälter nicht dargestellt).

Nun wird die Klappe 218 geschlossen, und mittels des Bedienfelds 208 werden eine gewünschte Erwärmungsleistung und eine gewünschte Erwärmungszeit vorgewählt und der Erwärmungsvorgang gestartet.

Mit Beginn des Erwärmungsvorgangs nimmt das Steuergerät der Speisenerwärmungsvorrichtung 100 den Hochfrequenzgenerator 146 in Betrieb, welcher über seinen ersten Ausgang 144 die kleineren Induktionsspulen 132 und über seinen zweiten Ausgang 156 die größeren Induktionsspulen 134 jeweils mit einem hochfrequenten Wechselstrom speist.

Wie aus den Fig. 2 und 3 zu ersehen ist, sind die Tabletthalter 178 an dem ersten Vertikalförderer 168 und an dem zweiten Vertikalförderer 170 so angeordnet, daß die in der jeweils untersten Position an diesen Vertikalförderern 168, 170 gehaltenen Tabletts 166 gerade auf der Bodenplatte 158 aufliegen.

Die Speisenbehälter mit den zu erwärmenden Speisen darin sind auf den Tabletts 166 jeweils so angeordnet, daß diese in der untersten Position des ersten Vertikalförderers 168 bzw. des zweiten Vertikalförderers 170 gerade über den Induktionsspulen 132, 134 zu stehen kommen.

Bei den Speisenbehältern handelt es sich meist um schalen- oder schüsselförmige Behältnisse, häufig aus Porzellan, auf deren Böden Metallfolien aufgeklebt oder metallische Bereiche aufgespritzt sind. In diesen metallischen Bereichen werden durch die unter den Speisenbehältern befindlichen Induktionsspulen 132, 134 Wirbelströme erzeugt, welche zu einer Erwärmung der Speisenbehälter und damit der darin befindlichen Speisen oder Getränke führen.

So kann beispielsweise vorgesehen sein, daß ein Suppenbehälter so auf dem zugeordneten Tablett 166 angeordnet wird, daß er über der kleineren Induktionsspule 132 zu stehen kommt, während ein weiterer Speisenbehälter für den Hauptgang eines Menüs so angeordnet sein kann, daß er über der größeren Induktionsspule 134 zu stehen kommt.

In Abhängigkeit von der Anzahl der zu erwärmenden Speisen kann auch eine geringere oder größere Anzahl von Induktionsspulen vorgesehen sein.

Da die kleineren Induktionsspulen 132 einerseits und die größeren Induktionsspulen 134 andererseits durch verschiedene Ausgänge 144, 156 des Hochfrequenzgenerators 146 gespeist werden, kann die Heizleistung für jede Induktionsspulenart unterschiedlich gewählt werden.

Die Induktionsspulen 132, 134 und die diesen zugeführte Hochfrequenzspannung werden so ausgelegt, daß die im Netz maximal zulässige Heizleistung (von ungefähr 3,6 kW) erreicht, jedoch nicht überschritten wird.

Die unterste Position des ersten Vertikalförderers 168, in welcher die auf dem Tablett 166 angeordneten Speisenbehälter durch die in Fig. 7 links dargestellten Induktionsspulen erwärmt werden, wird im folgenden als erste Erwärmungsposition bezeichnet. Die unterste Position des zweiten Vertikalförderers 170, in welcher die auf dem Tablett 166 angeordneten Speisenbehälter durch die in Fig.7 rechts dargestellten Induktionsspulen 132, 134 erwärmt werden, wird im folgenden als zweite Erwärmungsposition bezeichnet.

Die übrigen Positionen, welche die Tabletts 166 im Innenraum 116 des Korpus 102 einnehmen können, werden im folgenden als Wartepositionen bezeichnet.

Nach Beginn des Erwärmungsvorgangs werden demnach die Speisenbehälter, die sich in der ersten und der zweiten Erwärmungsposition befinden, während eines Zeitraums von beispielsweise zwei Minuten erwärmt, während die sich in den Wartepositionen befindlichen Speisenbehälter nicht erwärmt werden.

Nach Ablauf der Erwärmungstaktzeit von beispielsweise zwei Minuten betätigt das Steuergerät der Speisenerwärmungsvorrichtung 100 den ersten Vertikalförderer 168, so daß das in der ersten Erwärmungsposition befindliche Tablett 166 nach oben in eine Warteposition und das in der zweitobersten Warteposition des ersten Vertikalförderers 168 befindliche Tablett 166 in die oberste Warteposition des ersten Vertikalförderers 168 bewegt wird, so daß der in Fig. 4 dargestellte Zustand erreicht wird.

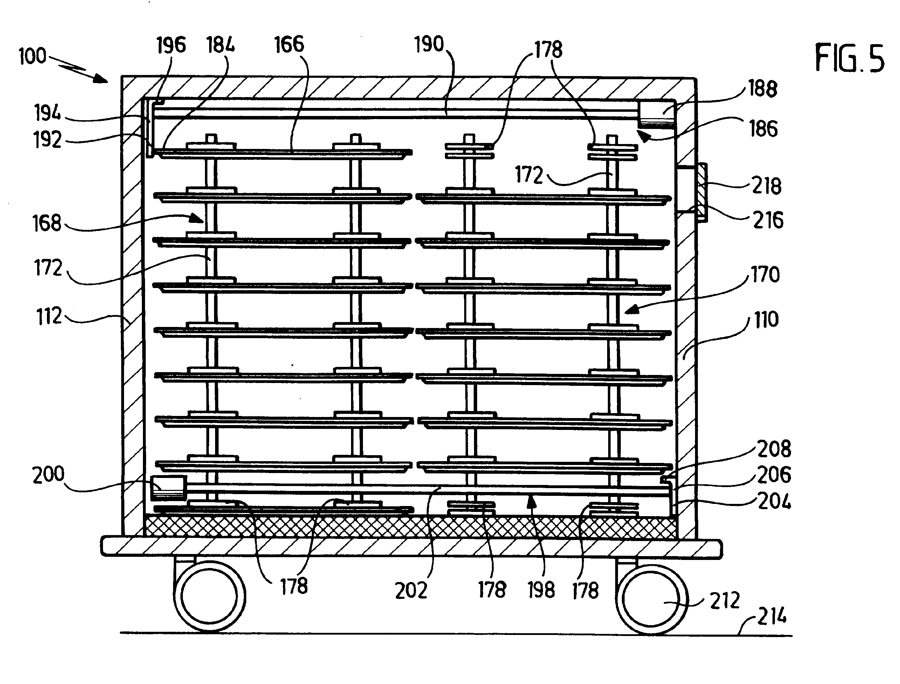

Anschließend wird das in der zweiten Erwärmungsposition befindliche Tablett 166 mittels des unteren Horizontalförderers 198 in die erste Erwärmungsposition verschoben, so daß der in Fig. 5 dargestellte Zustand erreicht wird.

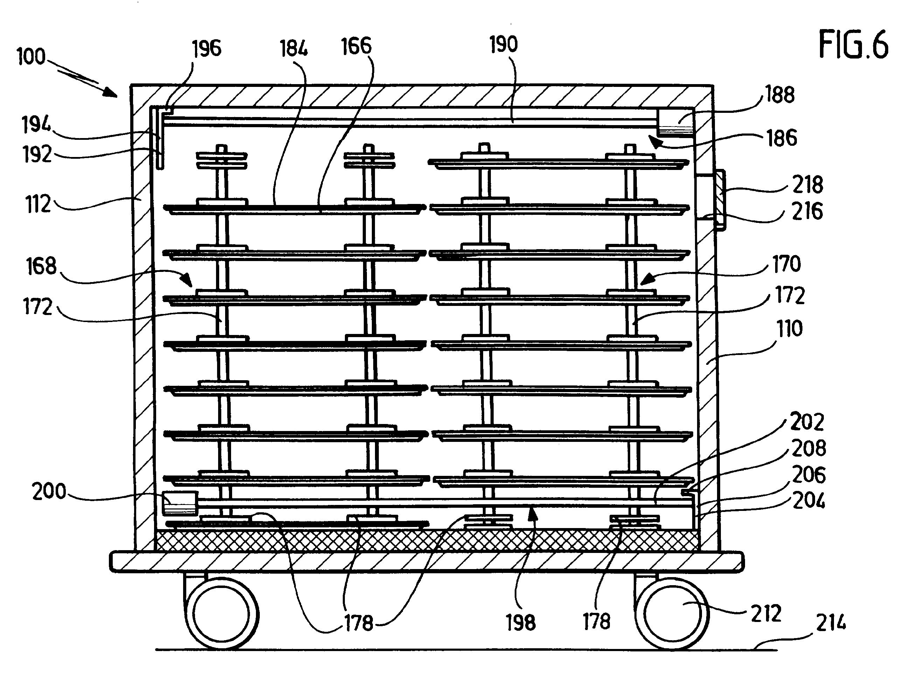

Hierauf wird das in der obersten Warteposition des ersten Vertikalförderers 168 befindliche Tablett mittels des oberen Horizontalförderers 186 in die oberste Warteposition des zweiten Vertikalförderers 170 verschoben, wo daß der in Fig. 6 dargestellte Zustand erreicht wird.

Die Verschiebung eines Tabletts 166 aus der zweiten in die erste Erwärmungsposition und die Verschiebung eines Tabletts aus der obersten Warteposition des ersten Vertikalförderers 168 in die oberste Warteposition des zweiten Vertikalförderers 170 können auch gleichzeitig erfolgen, um die Dauer eines Arbeitstakts der Transporteinrichtung 164 zu verkürzen.

Schließlich betätigt das Steuergerät der Speisenerwärmungsvorrichtung 100 den zweiten Vertikalförderer 170 so, daß die daran angeordneten Tabletts 166 jeweils um eine Position nach unten gefördert werden. Dadurch gelangt ein Tablett 166 aus der untersten Warteposition des zweiten Vertikalförderers 170 in die zweite Erwärmungsposition und das Tablett 166 aus der obersten Warteposition 166 in die zweitoberste Warteposition, so daß der in Fig. 3 dargestellte Zustand wieder erreicht wird.

Damit sind ein Arbeitstakt der Transporteinrichtung 164 und eine Erwärmungsphase abgeschlossen.

Durch den Wechsel von Erwärmungsphasen vorgegebener Dauer (von beispielsweise zwei Minuten) und anschließender Arbeitstakte der Transporteinrichtung 164 werden so die auf sämtlichen in den Innenraum 116 eingebrachten Tabletts 166 angeordneten Speisenbehälter seriell induktiv erwärmt, bis die vorgewärmte Erwärmungszeit abgelaufen ist.

Nach Ablauf der Erwärmungszeit schaltet das Steuergerät der Speisenerwärmungsvorrichtung 100 den Hochfrequenzgenerator 146 ab.

Anschließend wird die Klappe 218 geöffnet, um das in der zweitobersten Warteposition des zweiten Vertikalförderers 170 befindliche Tablett 166 mit den darauf angeordneten Speisenbehältern durch die Beschickungs- und Entnahmeöffnung 216 zu entnehmen.

Nach Entnahme dieses Tabletts wird die Drucktaste 210 betätigt, um das nächste Tablett in den Bereich der Beschickungs- und Entnahmeöffnung 216 zu bewegen.

Auf diese Weise werden sukzessive alle im Innenraum 116 der Speisenerwärmungsvorrichtung 100 befindlichen Tabletts 166 durch die Beschickungs- und Entnahmeöffnung 216 entnommen.

Da die vorstehend beschriebene Speisenerwärmungsvorrichtung 100 mittels der Laufrollen 212 verfahrbar ist, kann die Speisenerwärmungsvorrichtung 100 zwischen dem Beladen mit den Tabletts 166 und deren Erwärmung, zwischen der Erwärmung und der Entnahme der Tabletts 166 oder zwischen der Entnahme einzelner Tabletts 166 nach dem Erwärmungsvorgang jeweils an einen anderen Ort gebracht werden.

Alternativ hierzu ist jedoch auch möglich, die Speisenerwärmungsvorrichtung 100 als ortsfeste Vorrichtung, beispielsweise als Vorratsmagazin, zu verwenden.

## Patentansprüche

1. Speisenerwärmungsvorrichtung, umfassend eine Mehrzahl von Aufnahmen (178) für Speisenbehältereinheiten und mindestens eine Induktionsspule (132, 134) zum induktiven Beheizen der Speisenbehältereinheiten,
**dadurch gekennzeichnet**, daß die Speisenerwärmungsvorrichtung (100) eine Transporteinrichtung (164) umfaßt, mittels derer mindestens eine der Speisenbehältereinheiten relativ zu der Induktionsspule (132, 134) von einem Wartebereich der Speisenerwärmungsvorrichtung, in dem die Speisenbehältereinheit nicht beheizbar ist, in einen Erwärmungsbereich der Speisenerwärmungsvorrichtung, in welchem die Speisenbehältereinheit mittels der Induktionsspule (132, 134) induktiv beheizbar ist, und aus dem Erwärmungsbereich zurück in den Wartebereich bewegbar ist.

2. Speisenerwärmungsvorrichtung nach Anspruch 1, dadurch gekennzeichnet, daß mittels der Transporteinrichtung (164) mehrere Speisenbehältereinheiten nacheinander in dieselbe Erwärmungsposition des Erwärmungsbereichs bewegbar sind.

3. Speisenerwärmungsvorrichtung nach einem der Ansprüche 1 oder 2, dadurch gekennzeichnet, daß jede der Speisenbehältereinheiten mittels der Transporteinrichtung (164) von dem Wartebereich in den Erwärmungsbereich und aus dem Erwärmungsbereich zurück in den Wartebereich bewegbar ist.

4. Speisenerwärmungsvorrichtung nach einem der Ansprüche 1 bis 3, dadurch gekennzeichnet, daß die Speisenbehältereinheiten zyklisch von dem Wartebereich in den Erwärmungsbereich und von dem Erwärmungsbereich zurück in den Wartebereich bewegbar sind.

5. Speisenerwärmungsvorrichtung nach Anspruch 4, dadurch gekennzeichnet, daß der Wartebereich eine Mehrzahl von Wartepositionen für die Speisenbehältereinheiten umfaßt.

6. Speisenerwärmungsvorrichtung nach Anspruch 5, dadurch gekennzeichnet, daß die Speisenbehältereinheiten mehrere Wartepositionen in dem Wartebereich durchlaufen, bevor sie in den Erwärmungsbereich gelangen.

7. Speisenerwärmungsvorrichtung nach einem der Ansprüche 1 bis 6, dadurch gekennzeichnet, daß der Erwärmungsbereich mehrere, vorzugsweise zwei, Erwärmungspositionen für die Speisenbehältereinheiten umfaßt.

8. Speisenerwärmungsvorrichtung nach Anspruch 7, dadurch gekennzeichnet, daß die Speisenbehältereinheiten mehrere, vorzugsweise zwei, Erwärmungspositionen in dem Erwärmungsbereich durchlaufen, bevor sie den Erwärmungsbereich verlassen.

9. Speisenerwärmungsvorrichtung nach einem der Ansprüche 1 bis 8, dadurch gekennzeichnet, daß die Speisenbehältereinheiten durch die Transporteinrichtung (164) taktweise von einer Warte- oder Erwärmungsposition zu einer längs einer Förderrichtung der Transporteinrichtung (164) darauf folgenden Warte- oder Erwärmungsposition bewegbar sind.

10. Speisenerwärmungsvorrichtung nach Anspruch 9, dadurch gekennzeichnet, daß die Transporteinrichtung (164) in einem Automatikmodus betreibbar ist, in welchem die Transporteinrichtung selbsttätig mehrere Arbeitstakte hintereinander ausführt.

11. Speisenerwärmungsvorrichtung nach einem der Ansprüche 9 oder 10, dadurch gekennzeichnet, daß die Transporteinrichtung in einem Einzelschrittmodus betreibbar ist, in welchem die Transporteinrichtung (164) bei Betätigung eines Betätigungselements (210) einen einzelnen Arbeitstakt ausführt.

12. Speisenerwärmungsvorrichtung nach einem der Ansprüche 1 bis 11, dadurch gekennzeichnet, daß die Transporteinrichtung (164) mindestens einen Vertikalförderer (168, 170) umfaßt, durch welchen die Speisenbehältereinheiten in vertikaler Richtung bewegbar sind.

13. Speisenerwärmungsvorrichtung nach Anspruch 12, dadurch gekennzeichnet, daß der Vertikalförderer (168, 170) mindestens ein umlaufendes Endlosförderelement (172) umfaßt.

14. Speisenerwärmungsvorrichtung nach einem der Ansprüche 1 bis 13, dadurch gekennzeichnet, daß die Transporteinrichtung (164) mindestens einen Horizontalförderer (186, 198) umfaßt, durch welchen die Speisenbehältereinheiten in horizontaler Richtung bewegbar sind.

15. Speisenerwärmungsvorrichtung nach Anspruch 14, dadurch gekennzeichnet, daß der Horizontalförderer (186, 198) mindestens einen in horizontaler Richtung linear bewegbaren Schieber (192, 206) umfaßt.

16. Speisenerwärmungsvorrichtung nach einem der Ansprüche 1 bis 15, dadurch gekennzeichnet, daß die Induktionsspule (132, 134) in eine Bodenplatte (158) der Speisenerwärmungsvorrichtung (100) integriert ist.

17. Speisenerwärmungsvorrichtung nach einem der Ansprüche 1 bis 16, dadurch gekennzeichnet, daß die Transporteinrichtung (164) Tabletthalter (178) zur Aufnahme von Speisenbehälter-Tabletts (166) umfaßt.

18. Speisenerwärmungsvorrichtung nach Anspruch 17, dadurch gekennzeichnet, daß die in den Tabletthaltern (178) aufgenommenen Speisenbehälter-Tabletts (166) in horizontaler Richtung verschiebbar sind.

19. Speisenerwärmungsvorrichtung nach einem der Ansprüche 1 bis 18, dadurch gekennzeichnet, daß die Speisenerwärmungsvorrichtung (100) einen geschlossenen Korpus (102) mit einer verschließbaren Beschickungs- und Entnahmeöffnung (21) umfaßt.

20. Speisenerwärmungsvorrichtung nach Anspruch 19, dadurch gekennzeichnet, daß der Innenraum (116) des Korpus (102) im wesentlichen quaderförmig ist und außer der Transporteinrichtung (164) keine weiteren in den Innenraum (116) hineinragenden Einbauten aufweist.

21. Speisenerwärmungsvorrichtung nach einem der Ansprüche 1 bis 20, dadurch gekennzeichnet, daß die Speisenerwärmungsvorrichtung (100) mittels Rollen (212) verfahrbar ist.
